# EUROPÄISCHE PATENTSCHRIFT

(11) **EP 3 568 621 B1**
(45) Veröffentlichungstag und Bekanntmachung des Hinweises auf die Patenterteilung: **20.07.2022**
(21) Anmeldenummer: 18704404.5
(22) Anmeldetag: 16.01.2018
(51) Int. Cl.: F16K 11/044

(54) **MISCHKARTUSCHE FÜR EINE SANITÄRARMATUR MIT EINEM ZUMINDEST EINEN ROHRFÖRMIGEN ANSATZ AUFWEISENDEN STEUERKÖRPER**
MIXING CARTRIDGE FOR A SANITARY FITTING, COMPRISING A CONTROL BODY HAVING AT LEAST ONE TUBULAR SHOULDER
CARTOUCHE DE MITIGEUR POUR UNE ROBINETTERIE SANITAIRE POURVUE D'UN CORPS DE COMMANDE COMPORTANT AU MOINS UN EMBOUT TUBULAIRE

(30) Priorität: 16.01.2017 DE 102017100706
(43) Veröffentlichungstag der Anmeldung: 20.11.2019
(73) Patentinhaber: Grohe AG, 58653 Hemer (DE)
(72) Erfinder: KOSTORZ, Ole Benedikt, 58706 Menden (DE); TÜSHAUS, Jan Philipp, 58675 Hemer (DE)
(86) Internationale Anmeldenummer: PCT/EP2018/050956
(87) Internationale Veröffentlichungsnummer: WO 2018/130707

(56) Entgegenhaltungen:
- EP-A2- 1 496 415
- EP-A2- 1 881 390
- FR-E- 92 539
- US-A- 5 148 976

## Beschreibung

Die vorliegende Erfindung betrifft eine Mischkartusche für eine Sanitärarmatur zur Einstellung eines Mischungsverhältnisses zwischen einem Warmwasser und einem Kaltwasser zur Bereitstellung eines Mischwassers mit einer gewünschten und vorgebbaren Mischwassertemperatur. Solche Mischkartuschen werden insbesondere in Sanitärarmaturen für Duschen, Badewannen und/oder Waschbecken verwendet.

Aus dem Stand der Technik sind Sanitärarmaturen mit einem Armaturengehäuse bekannt, in denen eine Thermostatmischkartusche mit einem Regelkörper angeordnet ist. Thermostatmischkartuschen haben die Aufgabe, Kaltwasser und Warmwasser zu einem Mischwasser mit einer gewünschten und vorgebbaren Mischwassertemperatur zu mischen. Hierzu weisen die Mischkartuschen ein in einem Kartuschengehäuse ausgebildeten Mischraum auf, in dem das Warmwasser und Kaltwasser gemischt werden. Der Regelkörper ist regelmäßig mittels eines Dehnstoffelements zur Änderung eines Mischungsverhältnisses zwischen dem Kaltwasser und Warmwasser entlang eines Regelwegs verstellbar, sodass bei schwankenden Eingangstemperaturen und/oder -drücken des Kaltwassers und/oder Warmwassers stets eine im Wesentlichen konstante Mischwassertemperatur des durch die Thermostatmischkartusche gemischten Mischwassers erzielt wird. Darüber hinaus sind manuell betätigbare Mischkartuschen, das heißt Mischkartuschen ohne Dehnstoffelement, bekannt. Solche Mischkartuschen weisen jedoch regelmäßig einen anderen geometrischen Aufbau und andere geometrische Abmessungen auf, sodass diese nicht ohne erhebliche Anpassungen in Sanitärarmaturen verwendet werden können, deren Armaturengehäuse für Thermostatmischkartuschen vorbereitet sind.

FR 92 539 E offenbart eine Mischkartusche für eine Sanitärarmatur mit einem Dehnstoffelement, das die Temperatur des Mischwassers regelt.

Es wurde daher versucht, in bekannten Thermostatmischkartuschen das Dehnstoffelement zu entfernen und die Thermostatmischkartuschen ohne Dehnstoffelement in Sanitärarmaturen zu verwenden. Als nachteilig hat sich dabei jedoch herausgestellt, dass solche Mischkartuschen eine geringe "Sensibilität" bei der manuellen Einstellung der Mischwassertemperatur aufweisen. Dies bedeutet insbesondere, dass sich die Mischwassertemperatur bei derart modifizierten Mischventilen bereits bei geringen Drehwinkeln eines Einstellorgans sehr stark ändert, sodass eine exakte Einstellung der gewünschten Mischwassertemperatur nicht möglich ist. Weiterhin weisen derart modifizierte Mischkartuschen eine große Hysterese auf. Dies bedeutet insbesondere, dass sich die Mischwassertemperatur bei einer Betätigung des Einstellorgans nur stark verzögert und nicht linear ändert.

Aufgabe der Erfindung ist es daher, die mit Bezug auf den Stand der Technik geschilderten Probleme zumindest teilweise zu lösen und insbesondere eine Mischkartusche ohne Dehnstoffelement anzugeben, die eine hohe Sensibilität und eine geringe Hysterese aufweist.

Diese Aufgaben werden gelöst mit einer Mischkartusche gemäß den Merkmalen des unabhängigen Patentanspruchs. Weitere vorteilhafte Ausgestaltungen der Mischkartusche sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die erfindungsgemäße Mischkartusche für eine Sanitärarmatur weist zumindest die folgenden Komponenten auf:
a) ein Kartuschengehäuse,
b) einen Mischraum, der in dem Kartuschengehäuse ausgebildet ist,
c) zumindest ein Warmwasserzulauf für Warmwasser, der sich durch das Kartuschengehäuse erstreckt und in den Mischraum mündet,
d) zumindest ein Kaltwasserzulauf für Kaltwasser, der sich durch das Kartuschengehäuse erstreckt und in den Mischraum mündet,
e) zumindest einen Mischwasserablauf für Mischwasser, der aus dem Mischraum führt,
f) ein Steuerkörper, der entlang eines Steuerwegs verstellbar ist, wobei der Steuerkörper einen ersten ringförmigen Abschnitt, der den zumindest einen Kaltwasserzulauf in dem Kartuschengehäuse zur Ausbildung eines radial nach innen gerichteten Strömungspfads des Kaltwassers zumindest teilweise begrenzt, einen zweiten ringförmigen Abschnitt, der den zumindest einen Warmwasserzulauf in dem Kartuschengehäuse zur Ausbildung eines radial nach innen gerichteten Strömungspfads des Warmwassers zumindest teilweise begrenzt, und einen ersten und einen zweiten rohrförmige Ansatz aufweist, welche den radial nach innen gerichteten Strömungspfad des Kaltwassers oder den radial nach innen gerichteten Strömungspfad des Warmwassers in eine Längsrichtung des Kartuschengehäuses umlenken, wobei der erste rohrförmige Ansatz den ersten ringförmigen Abschnitt in Richtung eines ersten längsseitigen Endes des Steuerkörpers überragt, und wobei der zweite rohrförmige Ansatz den zweiten ringförmigen Abschnitt in Richtung eines zweiten längsseitigen Endes des Steuerkörpers überragt, wobei die Mischkartusche kein Dehnstoffelement zur Betätigung des Steuerkörpers aufweist, und wobei eine axiale Stärke des radial nach innen gerichteten Strömungspfads des Kaltwassers und des radial nach innen gerichteten Strömungspfads des Warmwassers durch die Verstellung des Steuer-körpers einstellbar ist, sodass eine Durchflussmenge des Warmwassers durch den radial nach innen gerichteten Strömungspfad des Warmwassers und eine Durchflussmenge des Kaltwassers durch den radial nach innen gerichteten Strömungspfad des Kaltwassers einstellbar sind.

Die Mischkartusche ist insbesondere für eine Sanitärarmatur vorgesehen, wobei die Sanitärarmatur beispielweise für Duschen, Badewannen, Waschbecken und/oder Spülbecken verwendbar ist. In einer solchen Sanitärarmatur hat die Mischkartusche die Aufgabe, ein Warmwasser und ein Kaltwasser in einem bestimmten Mischungsverhältnis so zu mischen, dass ein aus dem Warmwasser und Kaltwasser generiertes Mischwasser eine gewünscht und vorgebbare Mischwassertemperatur aufweist. Hierzu weist die Mischkartusche einen in einem Kartuschengehäuse ausgebildeten Mischraum auf. Das Kartuschengehäuse besteht bevorzugt aus Metall, insbesondere Messing. Bevorzugt weist das Kartuschengehäuse eine im Wesentlichen zylinderförmige Form auf, wobei das Kartuschengehäuse einen Außendurchmesser von circa 2 cm (Zentimeter) bis 5 cm und/oder eine Länge entlang einer Längsachse von bevorzugt 3 cm bis 5 cm hat. Zudem weist das Kartuschengehäuse zumindest einen in den Mischraum mündenden Warmwasserzulauf für Warmwasser und zumindest einen in den Mischraum mündenden Kaltwasserzulauf für Kaltwasser auf. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Durch den zumindest einen Warmwasserzulauf ist das Warmwasser und durch den zumindest einen Kaltwasserzulauf ist das Kaltwasser in den Mischraum leitbar.

Die Mischkartusche weist ferner einen Steuerkörper auf, der der Einstellung eines Mischungsverhältnisses zwischen dem Warmwasser und dem Kaltwasser zur Erzeugung eines Mischwassers dient. Das Mischwasser ist aus dem Mischraum durch zumindest einen aus dem Mischraum führenden Mischwasserablauf ableitbar. Der Steuerkörper ist insbesondere mittels eines (manuell betätigbaren) Regulierglieds, beispielsweise nach Art einer Reguliermutter, entlang eines Steuerwegs verstellbar. Die Mischkartusche weist zudem kein Dehnstoffelement zur Betätigung des Steuerkörpers auf. Durch die Verstellung des Steuerkörpers öffnet oder schließt der Steuerkörper den zumindest einen Warmwasserzulauf und/oder den zumindest einen Kaltwasserzulauf. Der Steuerweg des Steuerkörpers erstreckt sich insbesondere parallel zu der Längsachse der Mischkartusche. Der Steuerkörper weist einen ersten ringförmigen Abschnitt auf, der den zumindest einen Kaltwasserzulauf in dem Kartuschengehäuse zur Ausbildung eines radial nach innen gerichteten Strömungspfads des Kaltwassers zumindest teilweise begrenzt. Weiterhin weist der Steuerkörper einen zweiten ringförmigen Abschnitt auf, der den zumindest einen Warmwasserzulauf in dem Kartuschengehäuse zur Ausbildung eines radial nach innen gerichteten Strömungspfads des Warmwassers zumindest teilweise begrenzt. Der radial nach innen gerichtete Strömungspfad des Kaltwassers und/oder der radial nach innen gerichtete Strömungspfad des Warmwassers weist in die radiale Richtung nach innen insbesondere eine Länge von 1 mm (Millimeter) bis 10 mm auf. Durch die Verstellung des Steuerkörpers ist eine axiale Stärke des radial nach innen gerichteten Strömungspfads des Kaltwassers und des radial nach innen gerichteten Strömungspfads des Warmwassers einstellbar, sodass eine Durchflussmenge des Warmwassers durch den radial nach innen gerichteten Strömungspfad des Warmwassers und eine Durchflussmenge des Kaltwassers durch den radial nach innen gerichteten Strömungspfad des Kaltwassers einstellbar sind. Der Steuerkörper kann darüber hinaus den radial nach innen gerichteten Strömungspfad des Kaltwassers oder den radial nach innen gerichteten Strömungspfad des Warmwassers vollständig verschließen, sodass kein Warmwasser beziehungsweise Kaltwasser in den Mischraum fließen kann. Weiterhin weist der Steuerkörper zumindest einen ersten und zweiten rohrförmigen Ansatz auf, welche den radial nach innen gerichteten Strömungspfads des Kaltwassers beziehungsweise den radial nach innen gerichteten Strömungspfad des Warmwassers in eine Längsrichtung des Kartuschengehäuses umlenken. Der erste und zweite rohrförmige Ansatz weisen bevorzugt ausgehend von dem ersten ringförmigen Abschnitt beziehungsweise ausgehend von dem zweiten ringförmigen Abschnitt eine Länge in Längsrichtung von 1 mm bis 20 mm auf. Entsprechend wird auch der radial nach innen gerichtete Strömungspfad des Kaltwassers und/oder der radial nach innen gerichtete Strömungspfad des Warmwassers über eine Länge von bevorzugt 1 mm bis 20 mm in die Längsrichtung umgelenkt. Durch diese Ausgestaltung hat sich herausgestellt, dass sich die "Sensibilität" der Mischkartusche, das heißt insbesondere das Verhältnis zwischen einem Drehwinkel des Regulierglieds und einer Änderung der Mischwassertemperatur des Mischwassers, erheblich erhöht wird. Zudem hat sich herausgestellt, dass die Mischkartusche eine erheblich geringer Hysterese, das heißt eine deutlich niedrigere Verzögerung der Änderung der Mischwassertemperatur bei der Betätigung des Regulierglieds, aufweist. Für die Mischkartusche kann ein Kartuschengehäuse verwendet werden, dass den äußeren Abmessungen eines Kartuschengehäuses für eine bekannte Thermostatmischkartusche entspricht. Hierdurch kann die Mischkartusche in Armaturengehäusen für Thermostatmischkartuschen verwendet werden, ohne dass die Armaturengehäuse angepasst werden müssen. Zudem können für die Mischkartusche eine Vielzahl von Komponenten und Anbauteile bereits bekannter Thermostatmischkartuschen verwendet werden, wodurch Kosten reduzierbar sind.

Der erste rohrförmige Ansatz überragt den ersten ringförmigen Abschnitt in Richtung eines ersten längsseitigen Endes des Steuerkörpers. Dies bedeutet insbesondere, dass der erste rohrförmige Ansatz in der Längsrichtung eine größere Ausdehnung als der erste ringförmige Abschnitt aufweist.

Der zweite rohrförmige Ansatz überragt den zweiten ringförmigen Abschnitt in Richtung eines zweiten längsseitigen Endes des Steuerkörpers. Dies bedeutet insbesondere, dass der zweite rohrförmige Ansatz in der Längsrichtung eine größere Ausdehnung als der zweite ringförmige Abschnitt aufweist.

Vorzugsweise ist zwischen dem ersten ringförmigen Abschnitt und dem zweiten ringförmigen Abschnitt ein Dichtring angeordnet. Der Dichtring kann beispielsweise nach Art eines O-Rings ausgebildet sein und/oder besteht zumindest teilweise aus einem Elastomer.

Des Weiteren ist es vorteilhaft, wenn eine längsseitige Stirnfläche des zumindest einen rohrförmigen Ansatzes nicht orthogonal zu der Längsrichtung des Kartuschengehäuses verläuft. Dies bedeutet insbesondere, dass die zumindest eine längsseitige Stirnfläche des zumindest einen rohrförmigen Ansatzes quer zu der Längsrichtung des Kartuschengehäuses, beispielsweise mit einem Winkel von größer 0° und kleiner 90° verläuft. Hierdurch weist der in die Längsrichtung umgelenkte Strömungspfad des Kaltwassers und/oder der in die Längsrichtung umgelenkte Strömungspfad des Warmwassers in einer Umfangsrichtung des Kartuschengehäuses einen variablen Querschnitt auf, wodurch die Schmutzanfälligkeit reduziert wird.

Weiterhin ist es vorteilhaft, wenn der zumindest eine rohrförmige Ansatz zumindest teilweise konisch ausgebildet ist. Durch die konische Ausgestaltung des zumindest einen rohrförmigen Ansatzes kann die Sensibilität der Mischkartusche variiert werden.

Darüber hinaus ist es vorteilhaft, wenn das Kartuschengehäuse ein erstes Gehäuseteil und ein zweites Gehäuseteil umfasst.

Ebenfalls vorteilhaft ist es, wenn der erste ringförmige Abschnitt den radial nach innen gerichteten Strömungspfad des Kaltwassers mit dem ersten Gehäuseteil und der zweite ringförmige Abschnitt den radial nach innen gerichteten Strömungspfad des Warmwassers mit dem zweiten Gehäuseteil begrenzt.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine erste Ausführungsvariante einer Mischkartusche in einem Längsschnitt;
- Fig. 2:: eine vergrößerte Darstellung eines Bereichs der in der Fig. 1 gezeigten Mischkartusche im Längsschnitt;
- Fig. 3:: eine Teilansicht einer zweiten Ausführungsvariante einer Mischkartusche im Längsschnitt; und
- Fig. 4:: eine Teilansicht einer dritten Ausführungsvariante einer Mischkartusche im Längsschnitt.

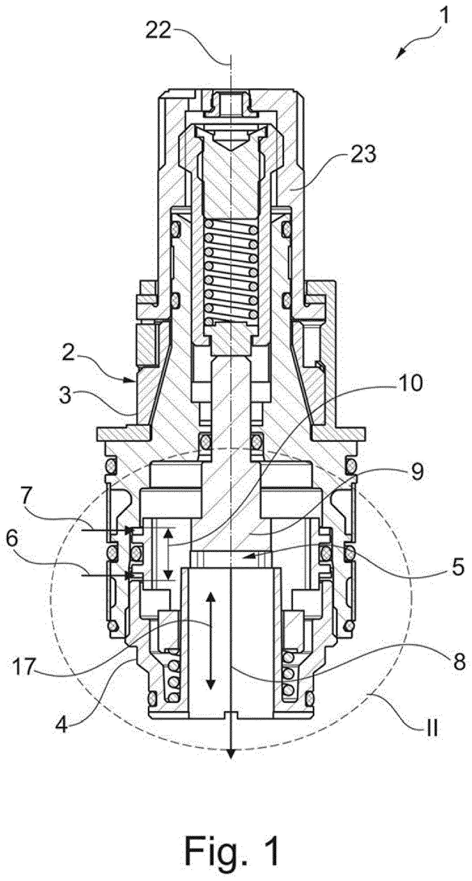

Die Fig. 1 zeigt eine erste Ausführungsvariante einer Mischkartusche 1 in einem Längsschnitt. Die Mischkartusche 1 weist ein Kartuschengehäuse 2 auf, das ein erstes Gehäuseteil 3 und ein zweites Gehäuseteil 4 umfasst. In dem Kartuschengehäuse 2 ist ein Mischraum 5 ausgebildet. In dem Mischraum 5 befindet sich ein Steuerkörper 9, der mittels eines (manuellen) Regulierglieds 23, das hier nach Art einer Reguliermutter ausgebildet ist, in einer Längsrichtung 17 parallel zu einer Längsachse 22 der Mischkartusche 1 verstellbar ist. Das Kartuschengehäuse 2 weist einen Warmwasserzulauf 6 für Warmwasser und einen Kaltwasserzulauf 7 für Kaltwasser auf. Der Warmwasserzulauf 6 und der Kaltwasserzulauf 7 münden in dem Mischraum 5, in dem das Warmwasser und das Kaltwasser zu einem Mischwasser mischbar sind. Das Mischwasser kann über einen Mischwasserablauf 8 aus dem Mischraum 5 abfließen. Zur Einstellung einer gewünschten Mischwassertemperatur des Mischwassers ist der Steuerkörper 9 mit dem Regulierglied 23 entlang eines Steuerwegs 10 verstellbar.

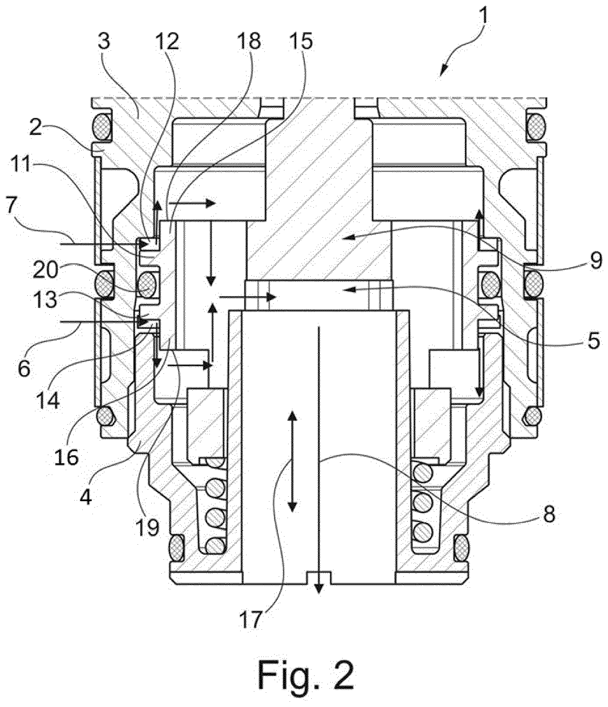

Die Fig. 2 zeigt den in der Fig. 1 mit II gekennzeichneten Bereich der Mischkartusche 1 in einer vergrößerten Darstellung. Der Steuerkörper 9 weist einen ersten ringförmigen Abschnitt 11 und einen zweiten ringförmigen Abschnitt 13 auf, zwischen denen ein Dichtring 20 angeordnet ist. Der Kaltwasserzulauf 7 mündet in einem radial nach innen gerichteten Strömungspfad des Kaltwassers 12, der durch den ersten ringförmigen Abschnitt 11 des Steuerkörpers 9 und das erste Gehäuseteil 3 des Kartuschengehäuses 2 begrenzt wird. Der Warmwasserzulauf 6 mündet in einem radial nach innen gerichteten Strömungspfad des Warmwassers 14, der durch den zweiten ringförmigen Abschnitt 13 des Steuerkörpers 9 und das zweite Gehäuseteil 4 des Kartuschengehäuses 2 begrenzt wird. Weiterhin weist der Steuerkörper 9 einen ersten rohrförmigen Ansatz 15 auf, der den ersten ringförmigen Abschnitt 11 in der Längsrichtung 17 beziehungsweise in Richtung eines ersten längsseitigen Endes 18 des Steuerkörpers 9 überragt. Weiterhin weist der Steuerkörper 9 einen zweiten rohrförmigen Ansatz 16 auf, der den zweiten ringförmigen Abschnitt 13 in der Längsrichtung 17 beziehungsweise in Richtung eines zweiten längsseitigen Endes 19 des Steuerkörpers 9 überragt. Der erste rohrförmige Ansatz 15 lenkt den radial nach innen gerichteten Strömungspfad des Kaltwassers 12 in die Längsrichtung 17 des Kartuschengehäuses 2 um. Entsprechend lenkt der zweite ringförmige Abschnitt 13 den radial nach innen gerichteten Strömungspfad des Warmwassers 14 in die Längsrichtung 17 des Kartuschengehäuses 2 um. Nach dem in die Längsrichtung 17 des Kartuschengehäuses 2 umgelenkten Strömungspfad des Kaltwassers 12 und dem in die Längsrichtung 17 des Kartuschengehäuses 2 umgelenkten Strömungspfad des Warmwassers 14 strömt das Kaltwasser und das Warmwasser in den Mischraum 5 und verlässt den Mischraum 5 als Mischwasser durch den Mischwasserablauf 8.

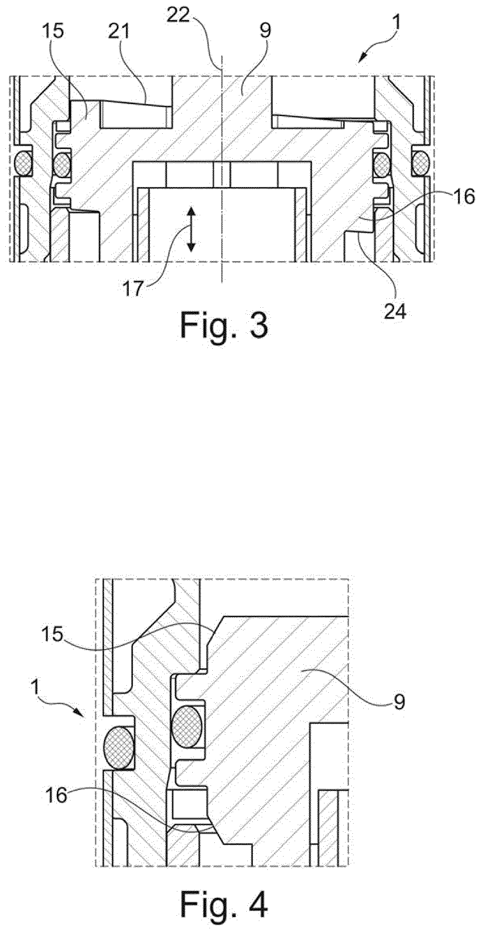

Die Fig. 3 zeigt einen Ausschnitt einer zweiten Ausführungsvariante einer Mischkartusche 1 im Bereich des Steuerkörpers 9. Die zweite Ausführungsvariante der Mischkartusche 1 unterscheidet sich von der in den Fig. 1 und 2 gezeigten ersten Ausführungsvariante der Mischkartusche 1 dadurch, dass eine erste Stirnfläche 21 des ersten rohrförmigen Ansatzes 15 nicht orthogonal zur Längsrichtung 17 beziehungsweise der Längsachse 22 der Mischkartusche 1 verläuft. Ebenso verläuft auch eine zweite Stirnfläche 24 des zweiten rohrförmigen Ansatzes 16 nicht orthogonal zu der Längsrichtung 17 beziehungsweise der Längsachse 22 der Mischkartusche 1. Im Übrigen ist die zweite Ausführungsvariante der Mischkartusche 1 entsprechend der in den Fig. 1 und 2 gezeigten ersten Ausführungsvariante der Mischkartusche 1 ausgestaltet.

Die Fig. 4 zeigt einen Ausschnitt einer dritten Ausführungsvariante einer Mischkartusche 1, die sich von der in den Fig. 1 und 2 gezeigten ersten Ausführungsvariante der Mischkartusche 1 und der in der Fig. 3 gezeigten zweiten Ausführungsführungsvariante der Mischkartusche 1 dadurch unterscheidet, dass der erste rohrförmige Ansatz 15 und der zweite rohrförmige Ansatz 16 des Steuerköpers 9 konisch ausgebildet sind. Im Übrigen ist die dritte Ausführungsvariante der Mischkartusche 1 entsprechend der in den Fig. 1 und 2 gezeigten ersten Ausführungsvariante der Mischkartusche 1 ausgestaltet.

Die vorgeschlagene Mischkartusche zeichnet sich durch eine hohe Sensibilität und eine geringe Hysterese aus. Zudem kann diese in Armaturengehäusen für Thermostatmischkartuschen verwendet werden, ohne dass diese einer Anpassung bedürfen.

### Bezugszeichenliste

- 1: Mischkartusche
- 2: Kartuschengehäuse
- 3: erstes Gehäuseteil
- 4: zweites Gehäuseteil
- 5: Mischraum
- 6: Warmwasserzulauf
- 7: Kaltwasserzulauf
- 8: Mischwasserablauf
- 9: Steuerkörper
- 10: Steuerweg
- 11: erster ringförmiger Abschnitt
- 12: radial nach innen gerichteter Strömungspfad des Kaltwassers
- 13: zweiter ringförmiger Abschnitt
- 14: radial nach innen gerichteter Strömungspfad des Warmwassers
- 15: erster rohrförmiger Ansatz
- 16: zweiter rohrförmiger Ansatz
- 17: Längsrichtung
- 18: erstes längsseitiges Ende
- 19: zweites längsseitiges Ende
- 20: Dichtring
- 21: erste Stirnfläche
- 22: Längsachse
- 23: Regulierglied
- 24: zweite Stirnfläche

## Patentansprüche

1. Mischkartusche (1) für eine Sanitärarmatur, aufweisend:
a) ein Kartuschengehäuse (2) mit einem ersten Gehäuseteil (3) und einem zweiten Gehäuseteil (4),
b) einen Mischraum (5), der in dem Kartuschengehäuse (2) ausgebildet ist,
c) zumindest ein Warmwasserzulauf (6) für Warmwasser, der sich durch das Kartuschengehäuse (2) erstreckt und in den Mischraum (5) mündet,
d) zumindest ein Kaltwasserzulauf (7) für Kaltwasser, der sich durch das Kartuschengehäuse (2) erstreckt und in den Mischraum (5) mündet,
e) zumindest einen Mischwasserablauf (8) für Mischwasser, der aus dem Mischraum (5) führt,
f) ein Steuerkörper (9), der entlang eines Steuerwegs (10) verstellbar ist, wobei der Steuerkörper (9) mindestens einen ersten ringförmigen Abschnitt (11), der den zumindest einen Kaltwasserzulauf (7) in dem Kartuschengehäuse (2) zur Ausbildung eines radial nach innen gerichteten Strömungspfads des Kaltwassers (12) zumindest teilweise begrenzt, einen zweiten ringförmigen Abschnitt (13), der den zumindest einen Warmwasserzulauf (6) in dem Kartuschengehäuse (2) zur Ausbildung eines radial nach innen gerichteten Strömungspfads des Warmwassers (14) zumindest teilweise begrenzt, und einen ersten und einen zweiten rohrförmige Ansatz (15, 16) aufweist, welche den radial nach innen gerichteten Strömungspfad des Kaltwassers (12) beziehungsweise den radial nach innen gerichteten Strömungspfad des Warmwassers (14) in eine Längsrichtung (17) des Kartuschengehäuses (2) umlenken, wobei der erste rohrförmige Ansatz (15) den ersten ringförmigen Abschnitt (11) in Richtung eines ersten längsseitigen Endes (18) des Steuerkörpers (9) überragt, und wobei der zweite rohrförmige Ansatz (16) den zweiten ringförmigen Abschnitt (13) in Richtung eines zweiten längsseitigen Endes (19) des Steuerkörpers (9) überragt, **dadurch gekennzeichnet, dass** die Mischkartusche (1) kein Dehnstoffelement zur Betätigung des Steuerkörpers (9) aufweist, und dass eine axiale Stärke des radial nach innen gerichteten Strömungspfads des Kaltwassers (12) und des radial nach innen gerichteten Strömungspfads des Warmwassers (14) durch die Verstellung des Steuerkörpers (9) einstellbar ist, sodass eine Durchflussmenge des Warmwassers durch den radial nach innen gerichteten Strömungspfad des Warmwassers (14) und eine Durchflussmenge des Kaltwassers durch den radial nach innen gerichteten Strömungspfad des Kaltwassers (12) einstellbar sind.

2. Mischkartusche (1) nach einem der vorhergehenden Patentansprüche, wobei zwischen dem ersten ringförmigen Abschnitt (11) und dem zweiten ringförmigen Abschnitt (13) ein Dichtring (20) angeordnet ist.

3. Mischkartusche (1) nach einem der vorhergehenden Patentansprüche, wobei zumindest eine längsseitige Stirnfläche (21, 24) des zumindest einen rohrförmigen Ansatzes (15, 16) nicht orthogonal zu der Längsrichtung (17) des Kartuschengehäuses (2) verläuft.

4. Mischkartusche (1) nach einem der vorhergehenden Patentansprüche, wobei der zumindest eine rohrförmige Ansatz (15, 16) zumindest teilweise konisch ausgebildet ist.

5. Mischkartusche (1) nach einem der vorhergehenden Patentansprüche, wobei der erste ringförmige Abschnitt (11) den radial nach innen gerichteten Strömungspfad des Kaltwassers (12) mit dem ersten Gehäuseteil (3) und der zweite ringförmige Abschnitt (13) den radial nach innen gerichteten Strömungspfad des Warmwassers (14) mit dem zweiten Gehäuseteil (4) begrenzt.

## Claims

1. A mixing cartridge (1) for a sanitary fitting, having:
a) a cartridge housing (2) with a first housing part (3) and a second housing part (4),
b) a mixing chamber (5) formed in the cartridge housing (2),
c) at least one hot water inlet (6) for hot water, extending through the cartridge housing (2) and opening into the mixing chamber (5),
d) at least one cold water inlet (7) for cold water, extending through the cartridge housing (2) and opening into the mixing chamber (5),
e) at least one mixed water outlet (8) for mixed water, leading out of the mixing chamber (5),
f) a control body (9) which can be displaced along a control path (10), the control body (9) having a first annular portion (11) which at least partially delimits the at least one cold water inlet (7) in the cartridge housing (2) in order to form a radially inwardly directed flow path for the cold water (12), a second annular portion (13) which at least partially delimits the at least one hot water inlet (6) in the cartridge housing (2) in order to form a radially inwardly directed flow path for the hot water (14), and a first and a second tubular shoulder (15, 16) which divert the radially inwardly directed flow path of the cold water (12) and the radially inwardly directed flow path of the hot water (14), respectively, in a longitudinal direction (17) of the cartridge housing (2), the first tubular shoulder (15) projecting beyond the first annular portion (11) in the direction of a first longitudinal end (18) of the control body (9), and the second tubular shoulder (16) projecting beyond the second annular portion (13) in the direction of a second longitudinal end (19) of the control body (9), **characterized in that** the mixing cartridge (1) has no expansion element for actuating the control body (9), and **in that** an axial thickness of the radially inwardly directed flow path for the cold water (12) and the radially inwardly directed flow path for the hot water (14) is adjustable by the displacement of the control body (9), so that a flow rate of the hot water through the radially inwardly directed flow path for the hot water (14) and a flow rate of the cold water through the radially inwardly directed flow path for the cold water (12) are adjustable.

2. The mixing cartridge (1) according to any one of the preceding claims, wherein a sealing ring (20) is arranged between the first annular portion (11) and the second annular portion (13).

3. The mixing cartridge (1) according to any one of the preceding claims, wherein at least one longitudinal end face (21, 24) of the at least one tubular shoulder (15, 16) does not extend orthogonally to the longitudinal direction (17) of the cartridge housing (2).

4. The mixing cartridge (1) according to any one of the preceding claims, wherein the at least one tubular shoulder (15, 16) is formed to be at least partially conical.

5. The mixing cartridge (1) according to any one of the preceding claims, wherein the first annular portion (11) delimits the radially inwardly directed flow path for the cold water (12) with the first housing part (3) and the second annular portion (13) delimits the radially inwardly directed flow path for the hot water (14) with the second housing part (4).

## Revendications

1. Cartouche de mitigeur (1), destinée à une robinetterie sanitaire, comportant :
a) un corps de cartouche (2), pourvu d'une première partie de corps (3) et d'une deuxième partie de corps (4),
b) une chambre de mélange (5), qui est conçue dans le corps de cartouche (2),
c) au moins une arrivée d'eau chaude (6) pour de l'eau chaude, qui s'étend à travers le corps de cartouche (2) et qui débouche dans la chambre de mélange (5),
d) au moins une arrivée d'eau froide (7) pour de l'eau froide, qui s'étend à travers le corps de cartouche (2) et qui débouche dans la chambre de mélange (5),
e) au moins un écoulement d'eau mitigée (8) pour de l'eau mitigée, qui mène hors de la chambre de mélange (5),
f) un élément de commande (9), qui est ajustable le long d'un trajet de commande (10), l'élément de commande (9) comportant au moins une première section (11) de forme annulaire, qui délimite au moins en partie l'au moins une arrivée d'eau froide (7) dans le corps de cartouche (2), pour créer un chemin d'écoulement dirigé vers l'intérieur en direction radiale de l'eau froide (12), une deuxième section (13) de forme annulaire, qui délimite au moins en partie l'au moins une arrivée d'eau chaude (6) dans le corps de cartouche (2), pour créer un chemin d'écoulement dirigé vers l'intérieur en direction radiale de l'eau chaude (14), et un premier et un deuxième embouts (15, 16) de forme tubulaire, lesquels renvoient le chemin d'écoulement dirigé vers l'intérieur en direction radiale de l'eau froide (12), respectivement le chemin d'écoulement dirigé vers l'intérieur en direction radiale de l'eau chaude (14) dans une direction longitudinale (17) du corps de cartouche (2), le premier embout (15) de forme tubulaire saillant par-dessus la première section (11) de forme annulaire dans la direction d'une première extrémité (18) du côté longitudinal de l'élément de commande (9), et le deuxième embout (16) de forme tubulaire saillant par-dessus la deuxième section (13) de forme annulaire, en direction d'une deuxième extrémité (19) du côté longitudinal de l'élément de commande (9), **caractérisée en ce que** la cartouche de mitigeur (1) ne comporte aucun élément en matière expansible pour actionner l'élément de commande (9), et **en ce qu'**une force axiale du chemin d'écoulement dirigé vers l'intérieur en direction radiale de l'eau froide (12) et du chemin d'écoulement dirigé vers l'intérieur en direction radiale de l'eau chaude (14) est réglable par l'ajustement de l'élément de commande (9), de sorte qu'un débit de l'eau chaude à travers le chemin d'écoulement dirigé vers l'intérieur en direction radiale de l'eau chaude (14) et un débit de l'eau froide à travers le chemin d'écoulement dirigé vers l'intérieur en direction radiale de l'eau froide (12) soient réglables.

2. Cartouche de mitigeur (1) selon l'une quelconque des revendications précédentes, entre la première section (11) de forme annulaire et la deuxième section (13) de forme annulaire étant placée une bague d'étanchéité (20) .

3. Cartouche de mitigeur (1) selon l'une quelconque des revendications précédentes, au moins une face frontale (21, 24) du côté longitudinal de l'au moins un embout (15, 16) de forme tubulaire ne s'écoulant pas de manière orthogonale par rapport à la direction longitudinale (17) du corps de cartouche (2).

4. Cartouche de mitigeur (1) selon l'une quelconque des revendications précédentes, l'au moins un embout (15, 16) de forme tubulaire étant conçu au moins en partie de forme conique.

5. Cartouche de mitigeur (1) selon l'une quelconque des revendications précédentes, la première section (11) de forme annulaire délimitant le chemin d'écoulement dirigé vers l'intérieur en direction radiale de l'eau froide (12) pourvue de la première partie de corps (3) et la deuxième section (13) de forme annulaire délimitant le chemin d'écoulement dirigé vers l'intérieur en direction radiale de l'eau chaude (14) pourvue de la deuxième partie de corps (4).
